(19)

Europäisches Patentamt

European Patent Office

Office européen des brevets

(11) **EP 3 848 481 A1**

(12) **EUROPEAN PATENT APPLICATION**
published in accordance with Art. 153(4) EPC

(43) Date of publication:
**14.07.2021 Bulletin 2021/28**

(21) Application number: **19856817.2**

(22) Date of filing: **02.09.2019**

(51) Int Cl.:
*C23C 4/11* (2016.01)          *B32B 9/00* (2006.01)
*F01D 25/00* (2006.01)          *F02C 7/00* (2006.01)

(86) International application number:
**PCT/JP2019/034471**

(87) International publication number:
**WO 2020/050227 (12.03.2020 Gazette 2020/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **03.09.2018   JP 2018164967**

(71) Applicants:
  • **Japan Fine Ceramics Center
    Nagoya-shi, Aichi 456-8587 (JP)**
  • **Tocalo Co., Ltd.
    Kobe-shi, Hyogo 650-0047 (JP)**

(72) Inventors:
  • **MATSUDAIRA, Tsuneaki
    Nagoya-shi, Aichi 456-8587 (JP)**
  • **KITAOKA, Satoshi
    Nagoya-shi, Aichi 456-8587 (JP)**
  • **KAWASHIMA, Naoki
    Nagoya-shi, Aichi 456-8587 (JP)**

  • **KATO, Takeharu
    Nagoya-shi, Aichi 456-8587 (JP)**
  • **YOKOE, Daisaku
    Nagoya-shi, Aichi 456-8587 (JP)**
  • **OGAWA, Takafumi
    Nagoya-shi, Aichi 456-8587 (JP)**
  • **FISHER, Craig
    Nagoya-shi, Aichi 456-8587 (JP)**
  • **HABU, Yoichiro
    Akashi-shi, Hyogo 674-0093 (JP)**
  • **NAGAO, Mikako
    Kurokawa-Gun, Miyagi 981-3514 (JP)**
  • **ITO, Yoshiyasu
    Kobe-shi, Hyogo 650-0047 (JP)**
  • **OHIDE, Yuhei
    Akashi-shi, Hyogo 674-0093 (JP)**
  • **TAKAGI, Kaito
    Akashi-shi, Hyogo 674-0093 (JP)**

(74) Representative: **Sajda, Wolf E.
Meissner Bolte Patentanwälte
Rechtsanwälte Partnerschaft mbB
Postfach 86 06 24
81633 München (DE)**

(54) **THERMAL BARRIER COATING MATERIAL, AND ARTICLE**

(57)    A thermal barrier coating material contains a compound X that is a cation-deficient-type defective perovskite complex oxide. Unit cells of the compound X each include six oxygen atoms and has a structure in which two octahedrons sharing one oxygen atom are aligned. In the compound X, central axes of two octahedrons that belong to adjacent unit cells, respectively, and are adjacent to each other are inclined relative to each other. A plurality of sets of the two octahedrons that belong to the adjacent unit cells, respectively, and are adjacent to each other are arranged to form a periodic structure in which octahedrons having different inclinations are alternately arranged, and the compound X has a boundary surface at which a periodicity of the periodic structure changes, in a crystal structure thereof.

**EP 3 848 481 A1**

**(Cont. next page)**

## FIG. 2A

**Description**

TECHNICAL FIELD

The present invention relates to a thermal barrier coating material and an article using the thermal barrier coating material.

BACKGROUND ART

In a gas turbine for power generation, a jet engine for an aircraft, or the like, since the temperature of the combustion gas thereof is high, a coating called thermal barrier coating (TBC) is provided on the surface of a high-temperature part such as a rotor blade, a stator blade, and a combustor. The thermal barrier coating satisfies the required characteristics such as corrosion resistance, oxidation resistance, and heat resistance.

Hitherto, the thermal barrier coating has been formed, for example, using a thermal barrier coating material containing yttria-stabilized zirconia. In addition, thermal barrier coatings having more excellent heat resistance have also been developed.

As a material that imparts a lower thermal conductivity than a material containing yttria-stabilized zirconia (YSZ), for example, PATENT LITERATURE 1 proposes a thermal barrier coating material containing a compound represented by the following general Formula (A) such as $LaTa_3O_9$ or $YTa_3O_9$.

$$M^1M^2_3O_9 \ldots \qquad (A)$$

(wherein $M^1$ is one atom of one element selected from among rare earth elements, and $M^2$ is a tantalum atom or a niobium atom.)

Moreover, for example, PATENT LITERATURE 2 proposes a thermal barrier coating material containing a compound represented by the following general Formula (B) such as $Y_{0.80}La_{0.20}Ta_3O_9$ or $Y_{0.70}La_{0.30}Ta_3O_9$ and a compound represented by the following general Formula (C) such as $Y_{1.08}Ta_{2.76}Zr_{0.24}O_9$.

$$Y_{1-x}La_xTa_3O_9 \ldots \qquad (B)$$

(wherein x is 0.15 to 0.50.)

$$Y_{1+y}Ta_{3-3y}Zr_{3y}O_9 \ldots \qquad (C)$$

(wherein y is 0.05 to 0.10.)

CITATION LIST

PATENT LITERATURE

PATENT LITERATURE 1 : Japanese Laid-Open Patent Publication JP 2014-125656 A
PATENT LITERATURE 2: Japanese Laid-Open Patent Publication JP 2014-234553 A

SUMMARY OF THE INVENTION

TECHNICAL PROBLEM

The compounds represented by the above general Formulae (A) to (C) described in PATENT LITERATURE 1 or 2 each have a lower thermal conductivity than YSZ and thus is considered suitable for use as a thermal barrier coating.

Meanwhile, in the case where each of the compounds represented by the above general Formulae (A) to (C) is used as a thermal barrier coating, the structural stability may be inferior depending on the compound, and the thermal barrier coating may be damaged or peeled under high temperature or a heat cycle condition.

SOLUTION TO THE PROBLEM

Under such circumstances, the present inventors have further searched for a thermal barrier coating material, have found a new thermal barrier coating material having a low thermal conductivity and excellent structural stability, and have completed the present invention.

(1) A thermal barrier coating material according to the present invention contains a compound X which is a cation-deficient-type defective perovskite complex oxide, wherein
unit cells of the compound X each include six oxygen atoms and has a structure in which two octahedrons sharing one oxygen atom are aligned,
in the compound X, central axes of two octahedrons that belong to adjacent unit cells, respectively, and are adjacent to each other are inclined relative to each other,
a plurality of sets of the two octahedrons that belong to the adjacent unit cells, respectively, and are adjacent to each other are arranged to form a periodic structure in which octahedrons having different inclinations are alternately arranged, and
the compound X has a boundary surface at which a periodicity of the periodic structure changes, in a crystal structure thereof.

With the thermal barrier coating material according to the present invention, it is possible to form a thermal barrier coating (TBC) that is excellent in low thermal conductivity and structural stability.

In the present invention, the thermal barrier coating being excellent in structural stability means that decomposition and damage are less likely to occur in a high temperature range exceeding 1000 °C and/or that phase transformation (phase transition) does not occur when the temperature rises and/or falls in the normal temperature to high temperature range (for example, in the range of 100 °C to 1300 °C).

(2) In the thermal barrier coating material, a crystal system of the compound X is preferably a tetragonal crystal system.

(3) In the thermal barrier coating material, preferably, a plurality of the boundary surfaces exist in the crystal structure of the compound X, and one side of a region surrounded by the plurality of the boundary surfaces has a length of 1 to 10 nm.

(4) In the thermal barrier coating material, the central axes of the two octahedrons included in each of the unit cells are preferably inclined in directions different from each other.

The thermal barrier coating material that satisfies these requirements is more suitable for forming a thermal barrier coating (TBC) that is excellent in low thermal conductivity and structural stability.

In the present invention, the crystal system of the compound X is determined on the basis of a measurement result of X-ray diffraction measurement.

(5) In the thermal barrier coating material, the periodic structure preferably forms one unit having a total of four octahedrons including two octahedrons aligned vertically and two octahedrons aligned horizontally, as a constituent unit, when being viewed in a direction in which the two octahedrons of the unit cell are aligned.

(6) In the thermal barrier coating material of the above (5), in the crystal structure of the compound X, when focusing on two units that are adjacent to each other with a boundary line as a boundary when being viewed in the direction in which the two octahedrons of the unit cell are aligned, the central axes of the four octahedrons included in each of the respective units are preferably inclined so as to be line-symmetrical to each other.

(7) In the thermal barrier coating material, the compound X is preferably a compound represented by the following general Formula (1).

$$(M_{1-x}A_x)_{1-y-z}(Ta_{1-y}D_y)_3O_{9+\delta} \dots \qquad (1)$$

(wherein M is an atom of one element selected from among rare earth elements having a smaller ion radius than Sm, A is an atom of one element selected from among all rare earth elements, D is Hf or Zr, x, y, and z satisfy $0 \leq x \leq 0.4$, $0 \leq y \leq 0.2$, and $0 \leq z \leq 0.2$, respectively, and $\delta$ is a value satisfying electroneutrality, but a case where x, y, and z are all 0 is excluded).

The thermal barrier coating material containing the compound X represented by the general Formula (1) is particularly suitable for forming a thermal barrier coating (TBC) that is excellent in low thermal conductivity and structural stability.

(8) In the thermal barrier coating material, preferably, in the compound represented by the general Formula (1), M is Y, x = 0, $0 < y \leq 0.2$, and $0 \leq z \leq 0.2$.

In this case, the compound can be represented by the following general Formula (2).

$$Y_{1-y-z}(Ta_{1-y}D_y)_3O_{9+\delta} \qquad (2)$$

(in Formula (2), D is Hf or Zr, and y and z satisfy $0 < y \leq 0.2$ and $0 \leq z \leq 0.2$, respectively, and $\delta$ is a value satisfying electroneutrality).

A thermal barrier coating using the thermal barrier coating material containing the compound represented by the general Formula (2) is more suitable for achieving both low thermal conductivity and structural stability. In particular, phase transformation (phase transition) is less likely to occur when the temperature rises and/or falls in the normal temperature to high temperature range. Therefore, even when the thermal barrier coating is used under a heat cycle condition in which the temperature rises and falls repeatedly, deformation and damage due to phase transformation are less likely to occur.

(9) In the thermal barrier coating material, preferably, in the compound represented by the general Formula (1), M is Yb, $0 < x \leq 0.4$, $y = 0$, and $z = 0$.

In this case, the compound can be represented by the following general Formula (3).

$$(Yb_{1-x}A_x)Ta_3O_9 \,..\qquad(3)$$

(in Formula (3), x satisfies $0 < x \leq 0.4$).

A thermal barrier coating using the thermal barrier coating material containing the compound represented by the general Formula (3) is more suitable for achieving both low thermal conductivity and structural stability. In particular, even when the thermal barrier coating is used in a high temperature range exceeding 1000 °C, decomposition and damage of the thermal barrier coating are less likely to occur. Therefore, the thermal barrier coating has excellent durability.

(10) An article according to the present invention includes a substrate and a coating laminated on the substrate and containing the above thermal barrier coating material.

In the article according to the present invention, a coating (thermal barrier coating) formed using the thermal barrier coating material is laminated on a surface of the substrate directly or with an intermediate layer therebetween.

As described above, the coating is excellent in low thermal conductivity and structural stability.

Therefore, the article is suitable for use as a high-temperature part that requires low thermal conductivity and durability.

(11) The article is suitable for use as a gas turbine part or a jet engine part.

Since the thermal barrier coating material containing the compound X is excellent in low thermal conductivity even in a high temperature range, the article is suitable for use as a gas turbine part or a jet engine part exposed to an atmosphere of at least 600 °C.

## ADVANTAGEOUS EFFECTS OF THE INVENTION

The thermal barrier coating material according to the present invention contains the compound X and is suitable for being used for forming a thermal barrier coating that contains the compound X and is excellent in low thermal conductivity and structural stability.

The article according to the present invention includes a coating containing the thermal barrier coating material and is suitable as a high-temperature part.

## BRIEF DESCRIPTION OF THE DRAWINGS

FIG. 1 is a schematic diagram showing the crystal structure of a compound represented by a general Formula: $RTa_3O_9$.

FIG. 2A is an image obtained by observing an example (compound of Example 1) of a compound having a domain structure with a transmission electron microscope.

FIG. 2B is an electron diffraction pattern obtained by observing the example (compound of Example 1) of the compound having a domain structure with a transmission electron microscope.

FIG. 3 is a diagram for describing a state where $TaO_6$ octahedrons are inclined in the compound represented by $RTa_3O_9$.

FIG. 4 is a diagram for describing the state where the $TaO_6$ octahedrons are inclined in the compound represented by $RTa_3O_9$.

FIG. 5 is a schematic cross-sectional view showing an example of an article according to an embodiment of the present invention.

FIG. 6 is a schematic cross-sectional view showing another example of the article according to the embodiment of the present invention.

FIG. 7 is a schematic cross-sectional view showing another example of a thermal barrier coating included in the article according to the embodiment of the present invention.

FIG. 8A is an image obtained by observing a compound of Example 3 with a transmission electron microscope.

FIG. 8B is an electron diffraction pattern obtained by observing the compound of Example 3 with a transmission electron microscope.

FIG. 9 shows measurement results of the thermal conductivities of fired bodies produced in Examples 1 to 3 and Comparative Examples 1 and 2.

FIG. 10 is a cross-sectional photograph of a thermal barrier coating produced in Example 4, taken with a scanning electron microscope.

DESCRIPTION OF EMBODIMENTS

Thermal Barrier Coating Material

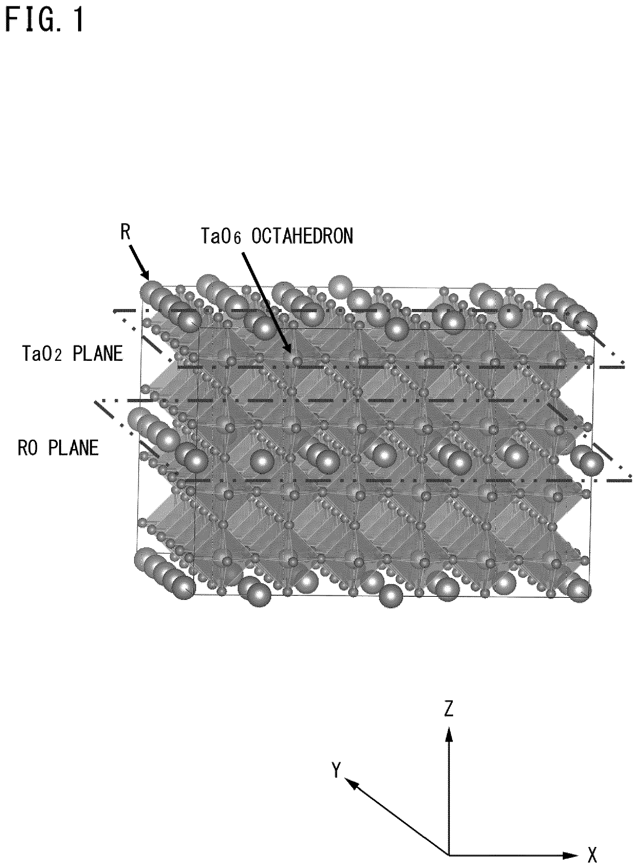

A thermal barrier coating material according to an embodiment of the present invention contains a compound X that is a cation-deficient-type defective perovskite complex oxide. The compound X has, for example, a structure shown in FIG. 1.

FIG. 1 is a schematic diagram showing the crystal structure of a compound represented by a general Formula: $RTa_3O_9$.

The structure shown in FIG. 1 has two $TaO_6$ octahedrons and an R atom as a basic configuration (unit cell) and has a crystal structure in which these components are arranged three-dimensionally. Each $TaO_6$ octahedron includes: an octahedron including six oxygen atoms; and one Ta located at the center of the octahedron. The two $TaO_6$ octahedrons included in one unit cell are located so as to be aligned in a Z direction in FIG. 1 such that the two $TaO_6$ octahedrons share one oxygen. The central axes of the two $TaO_6$ octahedrons included in the one unit cell are inclined in directions different from each other.

The central axis of each $TaO_6$ octahedron refers to a line segment extending along a direction in which the two $TaO_6$ octahedrons included in the unit cell are aligned, among line segments each connecting two vertices selected from among the six vertices included in the $TaO_6$ octahedron. All the surfaces of the $TaO_6$ octahedron are formed as triangles. Examples of the shape of the $TaO_6$ octahedron include regular octahedrons and double quadrangular pyramids, but the $TaO_6$ octahedron may be any other octahedron as long as all the surfaces thereof are triangular.

Moreover, in the description here, predetermined planes in the structure shown in FIG. 1 are defined as a $TaO_2$ plane (plane including one Ta atom and two O atoms in a unit cross-section) and an RO plane (plane including one R atom and one O atom in a unit cross-section). The RO plane is partially deficient in R ions. In the RO plane, R may be partially replaced with A. In addition, in the $TaO_2$ plane, Ta may be partially replaced with Hf or Zr.

The R site of FIG. 1 contains, for example, an atom R of one element selected from among rare earth elements and an atom A of another element selected from among rare earth elements as an optional atom, and the Ta site contains, for example, Ta and Hf or Zr as an optional atom.

Therefore, as for the compound X represented by the structure shown in FIG. 1, for example, in the general Formula: $RTa_3O_9$ (R is an atom of one element selected from among rare earth elements), a part of R may be replaced with an atom of one element selected from among rare earth elements other than R, and a part of Ta may be replaced with Hf or Zr.

The thermal barrier coating material containing the compound X is excellent in low thermal conductivity as described above.

The reason for this is inferred to be that the compound X is a compound having a predetermined structure (referred to as a domain or a domain structure in the present invention).

The domain structure is a structure observed in some of cation-deficient-type defective perovskite complex oxides, and is a specific structure newly found by the present inventors.

The domain structure is a characteristic structure observed with a transmission electron microscope or in an electron diffraction pattern.

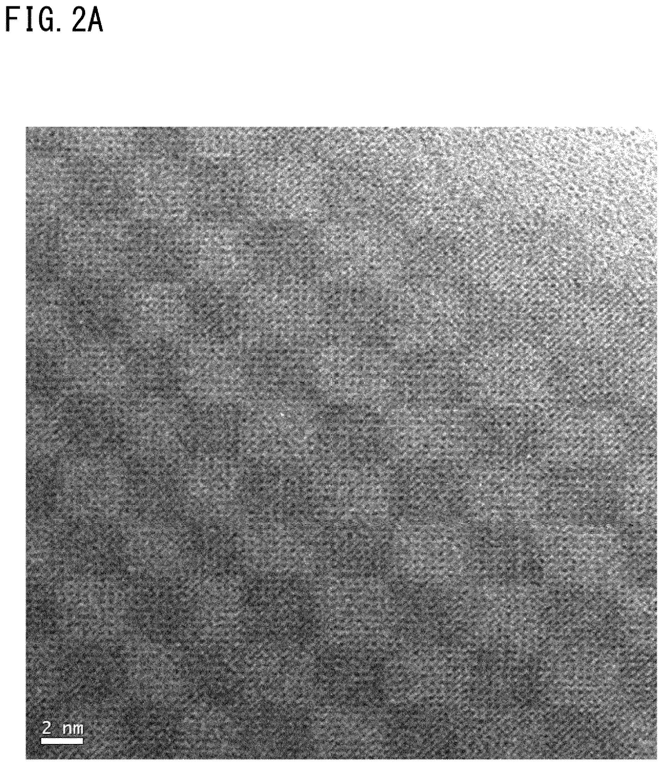

FIG. 2A is one image obtained by observing an example ($YbTa_3O_9$) of a cation-deficient-type defective perovskite complex oxide having a domain structure with a transmission electron microscope.

When an image of a compound having a domain structure, taken with a transmission electron microscope, is obtained, a structure in which two regions having different brightness (contrast) and a side length of 10 nm or less are periodically arranged is observed in the image in one crystal as shown in FIG. 2A.

In the present invention, a compound for which such a periodic structure is observed is referred to as a compound having a domain structure.

The observation image shown in FIG. 2A is an image obtained through observation with a transmission electron microscope under the <001> zone axis incident condition using ABF (Annular Bright Field).

For the compound having the domain structure, a characteristic image is also observed in an electron diffraction pattern.

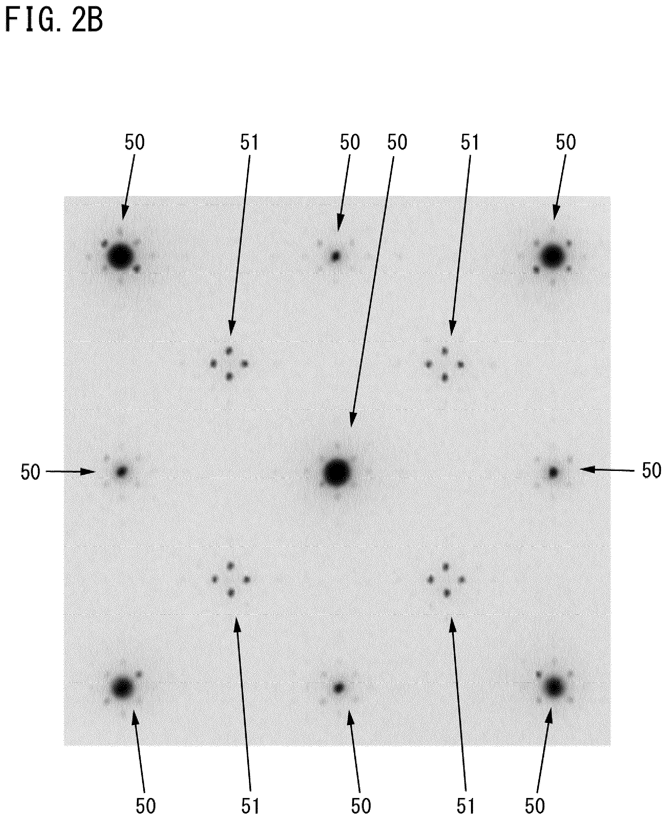

FIG. 2B is one electron diffraction pattern obtained by observing the example ($YbTa_3O_9$) of the cation-deficient-type defective perovskite complex oxide having the domain structure with a transmission electron microscope.

In the electron diffraction pattern of the cation-deficient-type defective perovskite complex oxide having the domain structure, in addition to nine basic diffraction spots 50, four rhombic spots 51 are detected at positions approximately equidistant from four basic diffraction spots 50 out of the nine basic diffraction spots 50.

Since these spots 51 are each located around the middle of the basic diffraction spots 50, it is clear that a superlattice having a larger periodicity than the unit cell is formed in the crystal structure of the cation-deficient-type defective perovskite complex oxide having the domain structure.

Moreover, in the example shown in FIG. 2B, since the four rhombic spots 51 are observed, it is found that, in the crystal structure, four domains exist so as to be adjacent to each other through boundary surfaces that intersect each other.

The domain structure is a structure observed in a cation-deficient-type defective perovskite complex oxide having a specific crystal structure, and is inferred to be due to the crystal structure of the above complex oxide.

This will be described in a more detail with reference to FIG. 1, FIG. 3, and FIG. 4.

In the crystal structure of the compound X, the central axis of an arbitrary $TaO_6$ octahedron belongs to a unit cell adjacent thereto and is inclined relative to the central axis of a $TaO_6$ octahedron adjacent thereto. In addition, the directions in which the adjacent two $TaO_6$ octahedrons are inclined form an angle of 90° or 180° as viewed in the Z direction in FIG. 1.

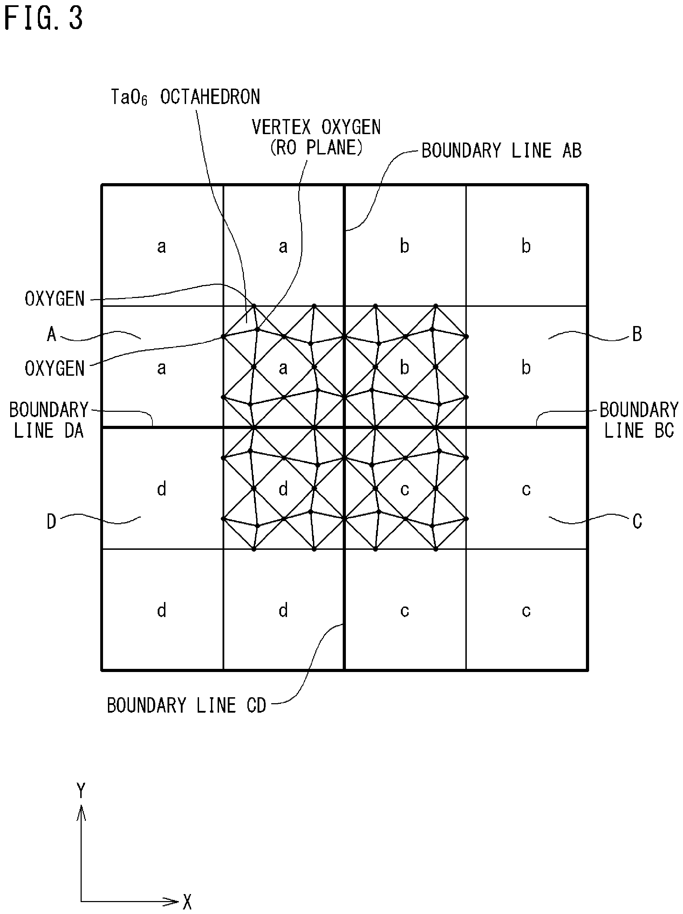

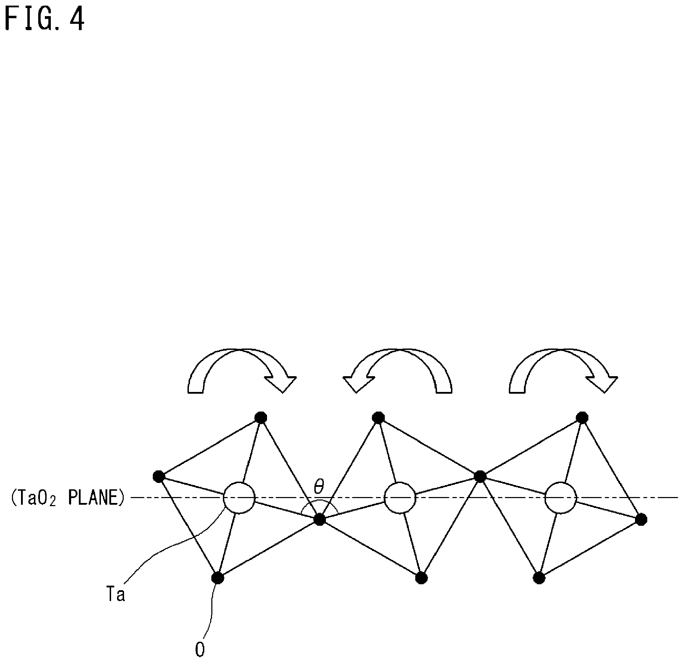

FIG. 3 and FIG. 4 are diagrams for describing a state where the respective $TaO_6$ octahedrons are inclined.

FIG. 3 is a view of the crystal structure of the compound X as viewed in a <001> direction (z-axis direction), and the $TaO_6$ octahedrons included in the crystal structure of the compound X are inclined in directions different from each other, relative to the <001> direction.

FIG. 3 shows four domains of A to D. Each of the domains A to D includes a plurality of units each having, as a constituent unit, a total of four octahedrons including two octahedrons aligned vertically and two octahedrons aligned horizontally. A plurality of such units are arranged, whereby a periodic structure in which $TaO_6$ octahedrons having different inclinations are alternately arranged is configured in one domain.

Meanwhile, when looking at the boundary surface of each domain (a boundary line AB, a boundary line BC, a boundary line CD, and a boundary line DA in the drawing), the periodicity of the direction in which the octahedron is inclined changes with this boundary surface as a boundary. In other words, the boundary at which the periodicity of the inclination of the plurality of $TaO_6$ octahedrons arranged changes corresponds to the boundary surfaces of the domains.

When comparing between domains, among four $TaO_6$ octahedrons included in each of two units that belong to adjacent domains, respectively, and that are adjacent to each other with the boundary surface as a boundary, $TaO_6$ octahedrons located at positions corresponding to each other are inclined so as to exactly form 90°. For example, when focusing on the domain A and the domain B, the direction of the central axis of the octahedron located at the upper left of the unit a is shifted by 90° with respect to that of the octahedron located at the upper left of the unit b.

Similarly, the octahedron located at the upper right of the unit a and the octahedron located at the upper right of the unit b, the octahedron located at the lower left of the unit a and the octahedron located at the lower left of the unit b, and the octahedron located at the lower right of the unit a and the octahedron located at the lower right of the unit b also have a relationship in which the directions of the central axes thereof are shifted by 90° with respect to each other.

In addition, it can also be said that the four octahedrons included in the unit a and the four octahedrons included in the unit b have a relationship in which the directions in which the central axes thereof are inclined are line-symmetrical with respect to the boundary line AB. This relationship is common to all the adjacent domains (that is, between A and B, between B and C, between C and D, and between D and A).

As a result, as shown in FIG. 3, when the points of intersection of the boundary lines between the four units a to d adjacent to four boundary lines (boundary lines AB, BC, CD, and DA) that form a cross shape are viewed clockwise (a →b →c →d), four $TaO_6$ octahedrons having central axes shifted by 90° with respect to each other are included, and a relationship of making one round at 360° is established.

When the crystal structure of the compound is observed with a transmission electron microscope with the domains including $TaO_6$ octahedrons having different central axis directions as a boundary, the crystal structure appears as regions having different brightness (contrast).

FIG. 4 is a view of the crystal structure of the compound X shown in FIG. 3 as viewed in a y-axis direction. To maintain the $TaO_2$ plane in the crystal structure of the compound X, the central axes of adjacent $TaO_6$ octahedrons are inclined in directions different from each other, relative to the z-axis direction.

In the crystal structure of the compound X in which the $TaO_6$ octahedrons are inclined, when the degree of inclination of each $TaO_6$ octahedron is smaller than 160° as a peak value in the distribution of an angle $\theta$ formed by Ta-O-Ta shown in FIG. 4, it is inferred that a domain structure is easily observed for the crystal structure of the compound X. Such a domain structure has $TaO_6$ octahedrons as a basic crystal structure, and is specifically observed for a cation-deficient-type defective perovskite complex oxide containing an atom of one element selected from among rare earth elements. The smaller the ion radius of the rare earth element is, the more significantly the characteristics can be seen. This is because, as the ion radius of the included rare earth element is smaller, the value of the angle $\theta$ formed by Ta-

O-Ta is smaller, and the distortion in the crystal structure is larger.

Moreover, a domain structure is easily observed particularly for a cation-deficient-type defective perovskite complex oxide in which the ion radius of the rare earth element included as the atom R is small and whose crystal system is a tetragonal crystal system. The crystal system being a tetragonal crystal system means that the angle $\theta$ formed by Ta-O-Ta in FIG. 4 is close to 180° or smaller than 180° (more significantly, equal to or less than 160°) but there is another structural factor that eliminates the structural distortion caused by the inclination.

The present inventors believe that the existence of a point where the periodicity of the inclination of a plurality of arranged $TaO_6$ octahedrons changes contributes to the elimination of such structural distortion. In fact, the present inventors have confirmed that, among cation-deficient-type defective perovskite complex oxides, a domain structure is not observed for $LaTa_3O_9$ containing La having a large ion radius among rare earth elements although the crystal system thereof is a tetragonal crystal system, but a domain structure is observed for $YbTa_3O_9$ containing Yb having a small ion radius among rare earth elements although the crystal system thereof is a tetragonal crystal system.

As described above, in the present invention, a boundary surface at which the periodicity of the inclination directions of the $TaO_6$ octahedrons changes in the crystal structure of the compound represented by $RTa_3O_9$ is referred to as a "domain interface", and each region demarcated by the boundary surface is referred to as a "domain".

Moreover, a structure observed as a periodic structure having different brightness in observation with a transmission electron microscope due to a plurality of the domains being arranged is referred to as a "domain structure".

The reason why the cation-deficient-type defective perovskite complex oxide having such a domain structure is excellent in low thermal conductivity, is considered to be that a plurality of domain interfaces that exist in one crystal become barriers that hinder heat conduction. In addition, it is considered that this effect significantly appears when the length of one side is 1 to 10 nm as the size of each of the formed domains.

It is sufficient that the compound X is a cation-deficient-type defective perovskite complex oxide having a domain structure, and the compound X is typically represented as a compound (hereinafter, also referred to as a compound (1)) represented by the following general Formula (1).

$$(M_{1-x}A_x)_{1-y-z}(Ta_{1-y}D_y)_3O_{9+\delta} \,... \qquad (1)$$

(in Formula (1), M is an atom of one element selected from among rare earth elements having a smaller ion radius than Sm, A is an atom of one element selected from among all the rare earth elements, D is Hf or Zr, and x, y, and z satisfy $0 \le x \le 0.4$, $0 \le y \le 0.2$, $0 \le z \le 0.2$, respectively, and $\delta$ is a value satisfying electroneutrality, but the case where x, y, and z are all 0 is excluded).

Examples of the rare earth element represented by M and having a smaller ion radius than Sm in the general Formula (1) include yttrium (Y), europium (Eu), gadolinium (Gd), terbium (Tb), dysprosium (Dy), holmium (Ho), erbium (Er), thulium (Tm), ytterbium (Yb), and lutetium (Lu). Among them, thulium (Tm), ytterbium (Yb), and lutetium (Lu) have a particularly small ion radius and easily cause distortion in the crystal structure.

Examples of the rare earth element representing the atom A in the general Formula (1) include scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu).

As the atom A, a rare earth element different from the atom M is selected.

The melting point of the thermal barrier coating material containing the compound (1) is preferably 1700 °C or higher.

The thermal conductivity, of the thermal barrier coating material, measured according to JIS R 1611 by a laser flash method (measurement temperature: 100 °C to 1300 °C) is preferably less than 1.7 W/(m·K).

The thermal barrier coating material according to the present invention may contain another component as long as the above-described characteristics (melting point, thermal conductivity) are not impaired.

The thermal barrier coating material contains the compound (1) as a main component. The "main component" refers to a component having the highest content ratio among all components and having a content ratio of 40 mol% or greater among all components. The content ratio of the main component among all components is preferably 80 mol% or greater and more preferably 98 mol% or greater.

A method for producing the compound (1) is generally a method in which a compound containing a rare earth element M having a smaller ion radius than Sm (hereinafter, referred to as a "compound (m1)"), a compound containing a rare earth element A other than the element M (hereinafter, referred to as a "compound (m2)"), a compound containing Ta (hereinafter, referred to as a "compound (m3)"), and a compound containing Hf or Zr (hereinafter, referred to as a "compound (m4)") are blended such that the molar ratio of each atom is a predetermined ratio (including O), and the mixture is heat-treated.

Furthermore, in order to obtain the compound (1) that is more homogeneous, for example, a method of obtaining a mixture containing urea and then heat-treating the mixture is also adopted.

As the compound (m1), the compound (m2), the compound (m3), and the compound (m4), oxides, hydroxides, sulfates, carbonates, nitrates, phosphates, halides, etc., can be used. Among them, in the case of obtaining a complex oxide having a more uniform composition, water-soluble compounds are preferable, but water-insoluble compounds can also be used.

The compound (1) is suitable as a material for forming a thermal barrier coating of a gas turbine part or a jet engine part.

As the compound (1) represented by the general Formula (1), a compound (2) and a compound (3) described later are particularly preferable.

The compound (2) and the compound (3) are excellent in low thermal conductivity and are also particularly excellent in structural stability in a high temperature atmosphere.

As for the compound (2), in the compound represented by the general Formula (1), M is Y, x = 0, and $0 < y \leq 0.2$.

The compound (2) can be represented by the following general Formula (2).

$$Y_{1-y-z}(Ta_{1-y}D_y)_3O_{9+\delta} .. \qquad .(2)$$

(in Formula (2), D is Hf or Zr, and y and z satisfy $0 < y \leq 0.2$ and $0 \leq z \leq 0.2$, respectively, and $\delta$ is a value satisfying electroneutrality).

The compound (2) represented by the general Formula (2) is a compound having the above domain structure, and a thermal barrier coating using a thermal barrier coating material containing this compound is excellent in low thermal conductivity.

In addition, the thermal barrier coating using the thermal barrier coating material containing the compound (2) is also excellent in structural stability since no phase transition occurs under the above-described heat cycle condition.

As for the compound (3), in the compound represented by the general Formula (1), M is Yb, $0 < x \leq 0.4$, y = 0, and z = 0.

The compound (3) can be represented by the following general Formula (3).

$$(Yb_{1-x}A_x)Ta_3O_9 . \qquad .(3)$$

(in Formula (3), x satisfies $0 < x \leq 0.4$).

The compound (3) represented by the general Formula (3) is a compound having the above domain structure, and a thermal barrier coating using a thermal barrier coating material containing this compound is excellent in low thermal conductivity.

In addition, the thermal barrier coating using the thermal barrier coating material containing the compound (3) is also excellent in structural stability since decomposition or damage is less likely to occur in the above high temperature range.

Article

An article according to an embodiment of the present invention includes a substrate and a coating (thermal barrier coating) laminated on the substrate and containing the above thermal barrier coating material.

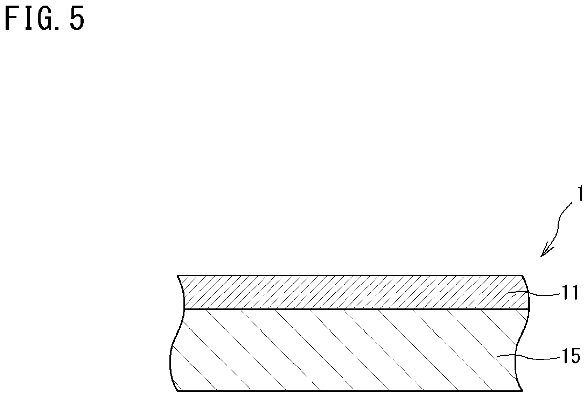

FIG. 5 is a schematic cross-sectional view showing an example of the article according to the embodiment of the present invention.

The article 1 shown in FIG. 5 includes a substrate 15 and a thermal barrier coating 11 laminated on the surface of the substrate 15.

The substrate 15 is a member made of a material such as a metal, an alloy, and a ceramic material, and a member made of a heat-resistant material such as a Ni-based super alloy, a Co-based super alloy, and a Fe-based super alloy is preferable.

The thermal barrier coating 11 is a coating formed using the thermal barrier coating material, and is a coating containing, as a main component, a thermal barrier coating material containing the compound X typified by the compound represented by the general Formula (1) such as the above-described compound (2) and the above-described compound (3).

The thermal barrier coating 11 can be formed, using the thermal barrier coating material, by a method such as electron beam physical vapor deposition (EB-PVD), chemical vapor deposition (CVD), atmospheric plasma spraying, low pressure plasma spraying, suspension thermal spraying (suspension plasma spraying, suspension high velocity flame spraying, etc.), high velocity flame spraying, and sintering. With such a method, the stable thermal barrier coating 11 can be formed on the surface of the substrate 15.

In the article 1 shown in FIG. 5, the thermal barrier coating 11 is directly laminated on the surface of the substrate 15.

Meanwhile, the thermal barrier coating included in the article according to the embodiment of the present invention does not necessarily need to be directly laminated on the surface of the substrate, and may be laminated on the substrate with an intermediate layer therebetween.

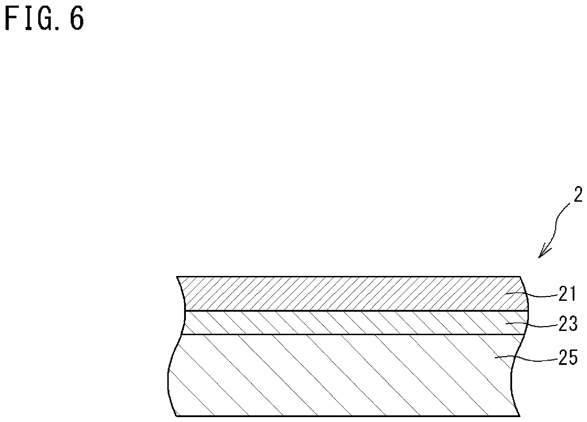

FIG. 6 is a schematic cross-sectional view showing another example of the article according to the embodiment of the present invention.

The article 2 shown in FIG. 6 includes a substrate 25, an intermediate layer 23, and a thermal barrier coating 21, and the thermal barrier coating 21 is laminated on the surface of the substrate 25 with the intermediate layer 23 therebetween.

The substrate 25 is a member that is the same as the substrate 15.

The intermediate layer 23 is a layer having adhesion to each of the substrate 25 and the thermal barrier coating 21. The material of the intermediate layer 23 may be any material having adhesion to each of the substrate 25 and the thermal barrier coating 21, and may be selected as appropriate in consideration of the material of each of the substrate 25 and the thermal barrier coating 21.

In these articles 1 and 2, each of the thicknesses of the thermal barrier coatings 11 and 21 is not particularly limited, and may be selected as appropriate according to the purpose of use and application of the article, etc., but the lower limit thereof is preferably 100 $\mu$m from the viewpoint of properties such as low thermal conductivity and structural stability as well as corrosion resistance, oxidation resistance, heat resistance, and an effect of protecting a substrate and an intermediate layer.

Meanwhile, it is needless to say that the thermal barrier coatings 11 and 21 are more excellent in the above properties as the thicknesses thereof are larger, but the thermal barrier coatings 11 and 21 can ensure the same degree of the above properties with a small thickness as compared to a known thermal barrier coating made of YSZ. Therefore, the weight can be reduced as compared to that of a conventional article, and the weight can be significantly reduced especially in a large article.

In the articles 1 and 2, each of the thermal barrier coatings 11 and 21 may be a dense layer or may be a porous layer. Each of the thermal barrier coatings 11 and 21 may be a layer having a segment structure including a plurality of columnar structures erected so as to extend outward from the substrate side (intermediate layer side).

The segment structure may be formed, for example, by adopting a method of performing suspension thermal spraying of the compound X typified by the above compound having an average particle diameter of 0.05 to 5 $\mu$m.

In the article 1 shown in FIG. 5, the thermal barrier coating 11 which is a single layer is laminated on the surface of the substrate 15.

Meanwhile, in the article according to the embodiment of the present invention, the thermal barrier coating may be a laminate.

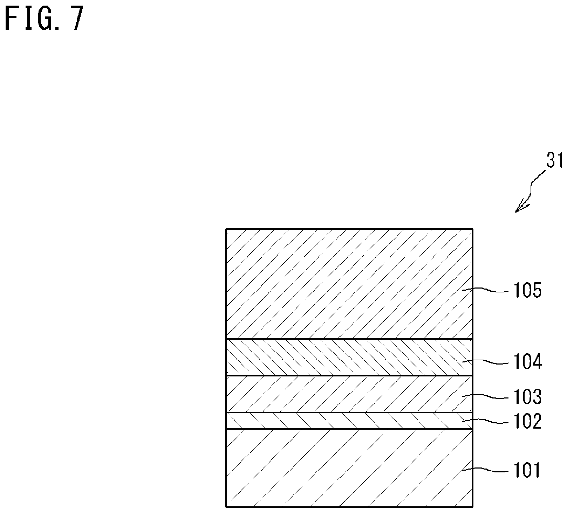

FIG. 7 is a schematic cross-sectional view showing another example of the thermal barrier coating included in the article according to the embodiment of the present invention.

The thermal barrier coating 31 shown in FIG. 7 is a laminate that includes: a metal bonding layer 101; an alumina layer 102 formed on the surface of the metal bonding layer 101 and containing aluminum oxide ($Al_2O_3$) as a main component; a first intermediate layer 103 laminated on the alumina layer 102; a second intermediate layer 104 laminated on the first intermediate layer 103; and a thermal barrier layer 105 laminated on the second intermediate layer 104. The respective layers included in the thermal barrier coating 31 are in close contact with each other.

The metal bonding layer 101 is a layer made of an alloy containing Al and preferably has a melting point of 1300 °C or higher. Specific examples of the metal bonding layer 101 include an MCrAlY alloy (M is at least one of Ni, Co, and Fe), platinum aluminide, and nickel-platinum-aluminide.

The metal bonding layer 101 is a layer laminated on the substrate.

The alumina layer 102 contains aluminum oxide as a main component.

The crystal phase of the aluminum oxide contained in the alumina layer 102 may be any of $\alpha$-alumina, $\beta$-alumina, $\gamma$-alumina, $\delta$-alumina, $\chi$-alumina, $\eta$-alumina, $\theta$-alumina, and $\kappa$-alumina, or may be a combination of two or more of these aluminas.

The alumina layer 102 is preferably made of only aluminum oxide ($Al_2O_3$), but may contain another compound composed of $NiAl_2O_4$, $(Co, Ni)(Al, Cr)_2O_4$, or the like.

The alumina layer 102 may be a layer that is inevitably formed on the surface of the metal bonding layer 101, from the metal bonding layer 101 containing Al, during use of the article.

As a method for forming the alumina layer 102, for example, a method of forcibly oxidizing the surface of the metal bonding layer 101 by heating at a high temperature in an oxygen-containing atmosphere, etc., can be adopted.

The thickness of the alumina layer 102 is not particularly limited, but is preferably 0.5 to 10 $\mu$m, more preferably 0.5 to 5 $\mu$m, and further preferably 0.5 to 2 $\mu$m from the viewpoint of durability, etc., under a heat cycle condition.

The first intermediate layer 103 is a layer containing hafnium oxide ($HfO_2$) as a main component (hereinafter, also referred to as a hafnia layer).

Even if the hafnia layer and the alumina layer are exposed to an atmosphere of 1600 °C in a state where both layers are in contact with each other, $Al_2O_3$ is not solid-dissolved in $HfO_2$, and thus the alumina layer does not disappear.

In addition, the Al component in the metal bonding layer 101 does not diffuse toward the thermal barrier layer 105.

Therefore, it is possible to avoid problems (degradation of the metal bonding layer, peeling between each layer, damage to the substrate, etc.) caused by Al in the metal bonding layer 101 moving to another layer to be depleted, during use of the article.

The first intermediate layer 103 is preferably made of only hafnium oxide ($HfO_2$), but may contain another compound as long as the above-described advantageous effects are obtained.

The porosity of the first intermediate layer 103 is preferably 5% by volume or less and more preferably 3% by volume or less.

The porosity of the first intermediate layer 103 is a value obtained by observing a cross-section of a coating with a scanning electron microscope (SEM) and calculating the area of pores in the entire coating.

The thickness of the first intermediate layer 103 is not particularly limited, but is preferably 10 to 50 $\mu$m and more preferably 10 to 20 $\mu$m since such a thickness is suitable for suppressing movement and diffusion of Al.

The second intermediate layer 104 is a layer containing, as a main component, a compound consisting of tantalum (Ta), hafnium (Hf), and oxygen (O) or a compound containing, in addition to these components, a rare earth element that is the same as M in the general Formula (1).

The compound consisting of tantalum (Ta), hafnium (Hf), and oxygen (O) is represented by the following general Formula (4).

$$Ta_yHf_zO_{(5y+4z)/2} \cdots \qquad (4)$$

(in Formula (4), y = 2.0, and $5.0 \leq z \leq 7.0$).

The compound consisting of the rare earth element that is the same as M in the general Formula (1), tantalum (Ta), hafnium (Hf), and oxygen (O) is represented by the following general Formula (5) or the following general Formula (6).

$$M_xTa_yHf_zO_{(3x+5y+4z)/2} \cdots \qquad (5)$$

(in Formula (5), $0 < x \leq 0.25$, $0 < y \leq 0.25$, and $0.5 \leq z \leq 1.0$).

$$M_xTa_yHf_zO_{(3x+5y+4z)/2} \cdots \qquad (6)$$

(in Formula (6), $0.5 \leq x \leq 1.0$, $0.5 \leq y \leq 1.0$, and $0 < z \leq 1.0$).

The second intermediate layer 104 is a layer having good adhesion to one or both of the first intermediate layer (hafnia layer) 103 and the thermal barrier layer 105. Since the second intermediate layer 104 is provided, peeling of the thermal barrier layer 105 is less likely to occur.

The compound represented by the general Formula (5) is a compound in which M and Ta are solid-dissolved in $HfO_2$, and a layer containing this compound as a main component has particularly excellent adhesion to the hafnia layer 103. In addition, the compound represented by the general Formula (5) itself has excellent heat barrier properties.

The compound represented by the general Formula (6) is a compound in which Hf is solid-dissolved in $MTaO_4$, and a layer containing this compound as a main component has particularly excellent adhesion to the thermal barrier layer 105. In addition, the compound represented by the general Formula (6) itself has excellent heat barrier properties.

The second intermediate layer 104 may be composed of two layers, an inner second intermediate layer (second intermediate layer located on the hafnia layer 103 side) and an outer second intermediate layer. In this case, preferably, the inner second intermediate layer is a layer containing the compound represented by the general Formula (5) as a main component, and the outer second intermediate layer is a layer containing the compound represented by the general Formula (6) as a main component.

The thickness of the second intermediate layer 104 is not particularly limited, but is preferably 0.2 to 30 $\mu$m.

In the case where the second intermediate layer 104 is composed of two layers, each of the thicknesses of the two layers is preferably 0.1 to 15 $\mu$m.

The compound forming the second intermediate layer 104 may be a compound in which x = 0 and/or y = 0 in the general Formula (5), or may be a compound in which z = 0 in the general Formula (6).

The thermal barrier layer 105 is a coating containing, as a main component, a thermal barrier coating material containing the compound X typified by the compound represented by the general Formula (1) such as the above-described compound (2) and the above-described compound (3).

The thermal barrier layer 105 may be a dense layer or may be a porous layer. Furthermore, the thermal barrier layer 105 may be a layer having a segment structure including a plurality of columnar structures erected so as to extend outward.

The thickness of the thermal barrier layer 105 is not particularly limited, but is preferably 100 to 2000 $\mu$m from

the viewpoint of properties such as low thermal conductivity and structural stability as well as corrosion resistance, oxidation resistance, heat resistance, and an effect of protecting the metal bonding layer. The thickness of the thermal barrier layer 105 is more preferably 200 to 500 $\mu$m.

The thermal barrier coating 31 having such a configuration can be produced by sequentially laminating each layer from the metal bonding layer 101 side.

For example, a coating of each layer may be sequentially laminated on the surface of the substrate.

In the formation of the above coating, the metal bonding layer 101, the first intermediate layer 103, and the second intermediate layer 104 may be produced, for example, by a method such as electron beam physical vapor deposition (EB-PVD), atmospheric plasma spraying, low pressure plasma spraying, suspension thermal spraying (suspension plasma spraying, suspension high velocity flame spraying, etc.), high velocity flame spraying, and sintering.

In addition, the alumina layer 102 may be intentionally formed on the surface of the metal bonding layer 101 by the above-described method, or may be inevitably formed during use of the article.

The thermal barrier layer 105 may be formed by forming a coating, using the compound X typified by the compound represented by the general Formula (1), by a method such as electron beam physical vapor deposition (EB-PVD), atmospheric plasma spraying, low pressure plasma spraying, suspension thermal spraying, and sintering.

In the thermal barrier coating 31 shown in FIG. 7, the metal bonding layer 101 to the second intermediate layer 104 can also be considered to correspond to the intermediate layer 23 in the article 2 shown in FIG. 6, and the thermal barrier layer 105 can also be considered to correspond to the thermal barrier coating 21 in the article 2.

Specific examples of the article include high-temperature parts such as rotor blades in jet engines for an aircraft and gas turbines for power generation, and high-temperature parts in various engines and high-temperature plants.

In the case where the article is a rotor blade in a jet engine for an aircraft, the operating temperature can be increased to improve fuel efficiency. In addition, in the case where the article is a rotor blade in a gas turbine for power generation, the operating temperature can be increased to improve power generation efficiency.

EXAMPLES

Hereinafter, the embodiments of the present invention will be described in further detail by means of examples, but the present invention is not limited to the examples. In the following, part(s) and % are on a mass basis unless otherwise specified.

Example 1: $YbTa_3O_9$

28 g (0.065 mol) of $Yb(NO_3)_3 \cdot 4H_2O$ powder (manufactured by Nippon Yttrium Co., Ltd.) having a purity of 99.9% or higher was put into 649 g of distilled water contained in a reactor made of a fluorine resin, and the mixture was stirred at room temperature (25 °C) for 1 hour to obtain a colorless transparent aqueous solution.

Next, 491 g (8 mol) of urea was added to this aqueous solution, and the mixture was stirred at room temperature (25 °C) for 1 hour. Then, 43 g (0.097 mol) of $Ta_2O_5$ powder (manufactured by RARE METALLIC Co., Ltd.) having a purity of 99.99% or higher was added to the obtained colorless transparent aqueous solution, and the mixture was stirred at room temperature (25 °C) for 7 hours to obtain a suspension.

Next, the suspension was heated to 95 °C and reacted (urea hydrolysis reaction) with stirring under reflux cooling (reaction time: 14 hours). Then, the obtained reaction solution was centrifuged at 25 °C and 4800 rpm for 30 minutes, and the gel in the lower layer was collected. This gel was put into a large amount of distilled water, and the mixture was sufficiently stirred. Then, the mixture was centrifuged under the same conditions as above, and the gel in the lower layer was collected. Then, the precipitate was heated in an air atmosphere at 120 °C for 14 hours to obtain dried powder.

Next, the dried powder was sieved (100 mesh) to collect fine powder. Then, this fine powder was subjected to press molding (pressure: 5 MPa) to produce a molded body having a disc shape. Thereafter, the molded body was heat-treated (calcined) in an air atmosphere at 1400 °C for 1 hour to obtain a calcined molded body. The obtained calcined molded body was dry-ground in a mortar at room temperature (25 °C).

Next, the dry-ground product was sieved (100 mesh) to collect fine powder. Then, this fine powder was subjected to press molding (pressure: 10 MPa). Thereafter, this molded body was heat-treated in an air atmosphere at 1700 °C for 1 hour to obtain a fired body. When the fired body was visually observed, it was confirmed that melting or the like due to the high temperature heat treatment at 1700 °C did not occur. The density $\rho$ was 7.99 g/cm$^3$.

When X-ray diffraction measurement was performed on the obtained fired body, it was confirmed that a fired body containing $YbTa_3O_9$, which is a main component and has a tetragonal crystal system, and a small amount of $Ta_2O_5$ and $YbTaO_4$, which are considered to be unreacted substances, was obtained.

Structural Stability at High Temperature

The obtained fired body was heat-treated in an air atmosphere at 1600 °C for 20 hours and then dry-ground in a mortar at room temperature (25 °C), and X-ray diffraction measurement was performed on the ground product.

As a result, $Ta_2O_5$ and $YbTaO_4$, which are considered to be decomposed from $YbTa_3O_9$, were partially detected, but, the main component was $YbTa_3O_9$ having a tetragonal crystal system.

Observation with Electron Microscope

For the obtained fired body: $YbTa_3O_9$, when an image was obtained through observation with a transmission electron microscope under the <001> zone axis incident condition using ABF (Annular Bright Field), the image shown in FIG. 2A was obtained.

As already described, in the obtained image, a structure in which two regions having different brightness (contrast) were periodically arranged was observed.

Moreover, when the fired body was observed with the transmission electron microscope to obtain an electron diffraction pattern, the electron diffraction pattern shown in

FIG. 2B was obtained. In the electron diffraction pattern, in addition to nine basic diffraction spots 50, four rhombic spots 51 were detected at positions approximately equidistant from four basic diffraction spots 50 out of the nine basic diffraction spots 50.

Example 2: $(Yb_{0.9}La_{0.1})Ta_3O_9$

25 g (0.065 mol) of $Yb(NO_3)_3 \cdot 4H_2O$ powder (manufactured by Nippon Yttrium Co., Ltd.) having a purity of 99.9% or higher was put into 665 g of distilled water contained in a reactor made of a fluorine resin, and the mixture was stirred at room temperature (25 °C) for 1 hour to obtain a colorless transparent aqueous solution. Thereafter, 3 g (0.006 mol) of $La(NO_3)_3 \cdot 6H_2O$ powder (manufactured by KANTO CHEMICAL CO., INC.) having a purity of 99.99% or higher was put into the aqueous solution, and the mixture was stirred at room temperature (25 °C) for 1 hour.

Next, 491 g (8 mol) of urea was added to this aqueous solution, and the mixture was stirred at room temperature (25 °C) for 1 hour. Then, 46 g (0.104 mol) of $Ta_2O_5$ powder (manufactured by RARE METALLIC Co., Ltd.) having a purity of 99.99% or higher was added to the obtained colorless transparent aqueous solution, and the mixture was stirred at room temperature (25 °C) for 7 hours to obtain a suspension.

Next, the suspension was heated to 95 °C and reacted (urea hydrolysis reaction) with stirring under reflux cooling (reaction time: 14 hours). Then, the obtained reaction solution was centrifuged at 25 °C and 4800 rpm for 30 minutes, and the gel in the lower layer was collected. This gel was put into a large amount of distilled water, and the mixture was sufficiently stirred. Then, the mixture was centrifuged under the same conditions as above, and the gel in the lower layer was collected.

Then, the precipitate was heated in an air atmosphere at 120 °C for 14 hours to obtain dried powder. Next, the dried powder was sieved (100 mesh) to collect fine powder. Then, this fine powder was subjected to press molding (pressure: 5 MPa) to produce a molded body having a disc shape. Thereafter, the molded body was heat-treated (calcined) in an air atmosphere at 1400 °C for 1 hour to obtain a calcined molded body. The obtained calcined molded body was dry-ground in a mortar at room temperature (25 °C).

Next, the dry-ground product was sieved (100 mesh) to collect fine powder. Then, this fine powder was subjected to press molding (pressure: 10 MPa). Thereafter, this molded body was heat-treated in an air atmosphere at 1700 °C for 1 hour to obtain a fired body. When the fired body was visually observed, it was confirmed that melting or the like due to the high temperature heat treatment at 1700 °C did not occur. The density $\rho$ was 8.17 $g/cm^3$.

When X-ray diffraction measurement was performed on the obtained fired body, it was confirmed that, in addition to $YbTa_3O_9$ which is a main component and has a tetragonal crystal system, $YbTa_7O_{19}$ having a Ta-rich composition as compared to $YbTa_3O_9$ was contained.

Structural Stability at High Temperature

The obtained fired body was heat-treated in an air atmosphere at 1400 °C for 20 hours and then dry-ground in a mortar at room temperature (25 °C), and X-ray diffraction measurement was performed on the ground product.

As a result, $Ta_2O_5$ and $YbTaO_4$ which are generated by decomposition of $YbTa_3O_9$ were not detected, so that it was confirmed that the fired body has excellent structural stability at high temperature.

Example 3: $Y_{0.8}(Ta_{0.9}Hf_{0.1})_3O_{8.6}$

28 g (0.065 mol) of $Y(NO_3)_3 \cdot 6H_2O$ powder (manufactured by KANTO CHEMICAL CO., INC.) having a purity of 99.99% or higher was put into 649 g of distilled water contained in a reactor made of a fluorine resin, and the mixture was stirred at room temperature (25 °C) for 1 hour to obtain a colorless transparent aqueous solution. Thereafter, 8 g (0.016 mol) of $HfCl_4$ powder (manufactured by Wako Pure Chemical Corporation) having a purity of 99.9% or higher was put into the aqueous solution, and the mixture was stirred at room temperature (25 °C) for 1 hour.

Next, 491 g (8 mol) of urea was added to this aqueous solution, and the mixture was stirred at room temperature (25 °C) for 1 hour. Then, 51 g (0.115 mol) of $Ta_2O_5$ powder (manufactured by RARE METALLIC Co., Ltd.) having a purity of 99.99% or higher was added to the obtained colorless transparent aqueous solution, and the mixture was stirred at room temperature (25 °C) for 7 hours to obtain a suspension.

Next, the suspension was heated to 95 °C and reacted (urea hydrolysis reaction) with stirring under reflux cooling (reaction time: 14 hours). Then, the obtained reaction solution was centrifuged at 25 °C and 4800 rpm for 30 minutes, and the gel in the lower layer was collected. This gel was put into a large amount of distilled water, and the mixture was sufficiently stirred. Then, the mixture was centrifuged under the same conditions as above, and the gel in the lower layer was collected.

Then, the precipitate was heated in an air atmosphere at 120 °C for 14 hours to obtain dried powder. Next, the dried powder was sieved (100 mesh) to collect fine powder. Then, this fine powder was subjected to press molding (pressure: 5 MPa) to produce a molded body having a disc shape. Thereafter, the molded body was heat-treated (calcined) in an air atmosphere at 1400 °C for 1 hour to obtain a calcined molded body. The obtained calcined molded body was dry-ground in a mortar at room temperature (25 °C).

Next, the dry-ground product was sieved (100 mesh) to collect fine powder. Then, this fine powder was subjected to press molding (pressure: 10 MPa). Thereafter, this molded body was heat-treated in an air atmosphere at 1700 °C for 1 hour to obtain a fired body. When the fired body was visually observed, it was confirmed that melting or the like due to the high temperature heat treatment at 1700 °C did not occur. The density $\rho$ was 7.21 $g/cm^3$.

When X-ray diffraction measurement was performed on the obtained fired body, it was confirmed that, in addition to $YbTa_3O_9$ which is a main component and has a tetragonal crystal system, a small amount of $Hf_6Ta_2O_{17}$ was contained.

Structural Stability at High Temperature

The obtained fired body was heat-treated in an air atmosphere at 1400 °C for 20 hours and then dry-ground in a mortar at room temperature (25 °C), and X-ray diffraction measurement was performed on the ground product.

As a result, $Ta_2O_5$ and $YTaO_4$ which are generated by decomposition of $YTa_3O_9$ were not detected, so that it was confirmed that the fired body has excellent structural stability at high temperature.

Observation with Electron Microscope

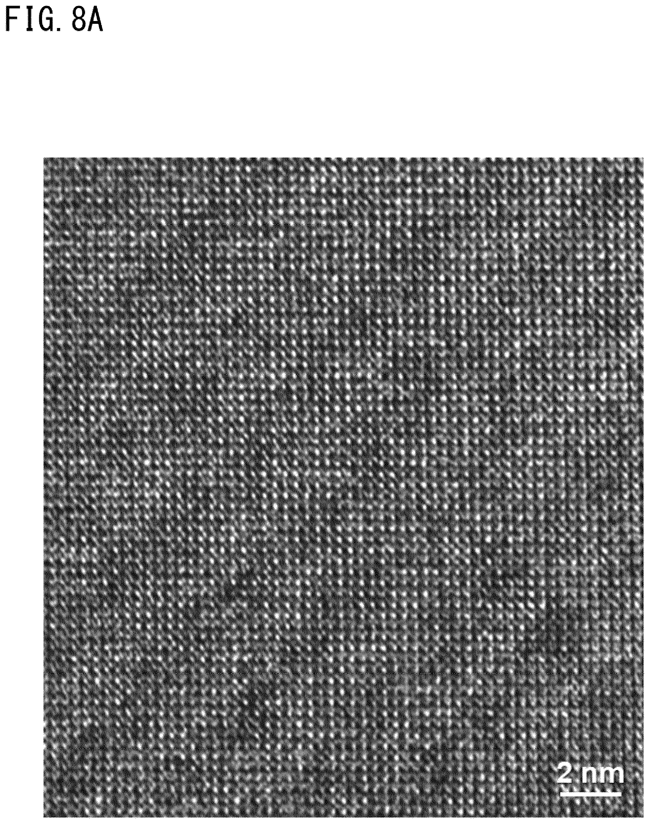

For the obtained fired body: $Y_{0.8}(Ta_{0.9}Hf_{0.1})_3O_{8.6}$, an image was obtained through observation with a transmission electron microscope under the <001> zone axis incident condition using ABF (Annular Bright Field). The obtained image is shown in FIG. 8A.

As shown in FIG. 8A, in the obtained image, a structure in which two regions having different brightness (contrast) were periodically arranged was observed.

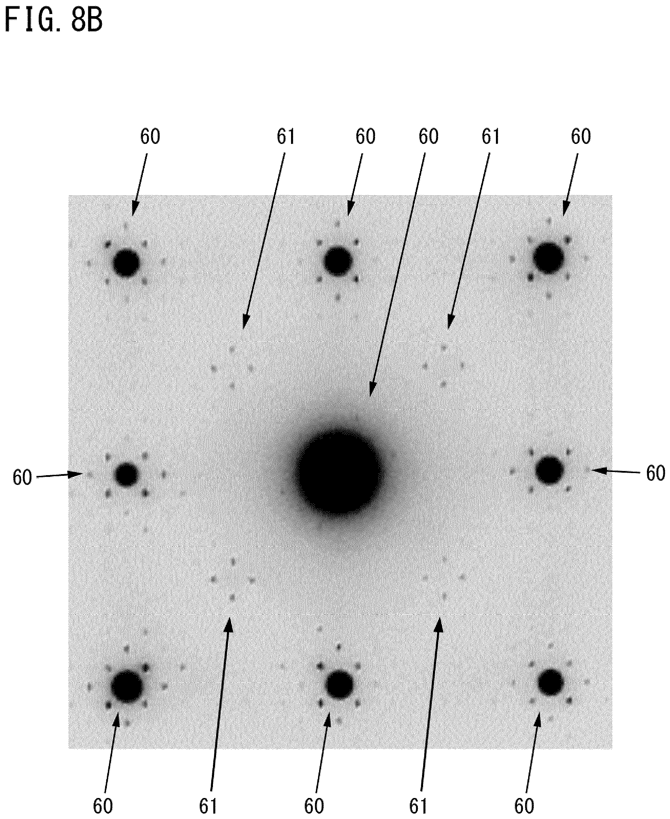

Moreover, when the fired body was observed with the transmission electron microscope to obtain an electron diffraction pattern, an electron diffraction pattern, in which, in addition to nine basic diffraction spots 60, four rhombic spots 61 were detected at positions approximately equidistant from four basic diffraction spots out of the nine basic diffraction spots 60 as shown in FIG. 8B, was obtained.

Evaluation of Thermal Conductivity

The thermal conductivity of the fired bodies obtained in Examples 1 to 3 was evaluated by the following method.

Moreover, Comparative Example 1: YSZ (7.4 wt% $Y_2O_3$-$ZrO_2$) and Comparative Example 2: $LaTa_3O_9$ were prepared as comparative samples, and the thermal conductivity thereof was evaluated in the same manner as the fired bodies produced in Examples 1 to 3.

Comparative Example 1: YSZ

TZ-4Y powder (7.4 wt% $Y_2O_3$-$ZrO_2$) manufactured by Tosoh Co., Ltd. was subjected to press molding (pressure: 25 MPa) and further subjected to cold isotropic hydrostatic pressure pressurization (load: 2.5 tons) to produce a molded body having a disc shape. Thereafter, the molded body was heat-treated in an air atmosphere at 1500 °C for 5 hours. The density $\rho$ was 6.05 g/cm$^3$.

Comparative Example 2: LaTa$_3$O$_9$

31 g (0.065 mol) of La(NO$_3$)$_3$·6H$_2$O powder (manufactured by KANTO CHEMICAL CO., INC.) having a purity of 99.99% or higher was put into 716 g of distilled water contained in a reactor made of a fluorine resin, and the mixture was stirred at room temperature (25 °C) for 1 hour to obtain a colorless transparent aqueous solution.

Next, 491 g (8 mol) of urea was added to this aqueous solution, and the mixture was stirred at room temperature (25 °C) for 1 hour. Then, 45 g (0.102 mol) of Ta$_2$O$_5$ powder (manufactured by RARE METALLIC Co., Ltd.) having a purity of 99.99% or higher was added to the obtained colorless transparent aqueous solution, and the mixture was stirred at room temperature (25 °C) for 7 hours to obtain a suspension.

Next, the suspension was heated to 95 °C and reacted (urea hydrolysis reaction) with stirring under reflux cooling (reaction time: 14 hours). Then, the obtained reaction solution was centrifuged at 25 °C and 4800 rpm for 30 minutes, and the gel in the lower layer was collected. This gel was put into a large amount of distilled water, and the mixture was sufficiently stirred. Then, the mixture was centrifuged under the same conditions as above, and the gel in the lower layer was collected. Then, the precipitate was heated in an air atmosphere at 120 °C for 14 hours to obtain dried powder.

Next, the dried powder was sieved (100 mesh) to collect fine powder. Then, this fine powder was subjected to press molding (pressure: 5 MPa) to produce a molded body having a disc shape. Thereafter, the molded body was heat-treated (calcined) in an air atmosphere at 1400 °C for 1 hour to obtain a calcined molded body. The obtained calcined molded body was dry-ground in a mortar at room temperature (25 °C).

Next, the dry-ground product was sieved (100 mesh) to collect fine powder. Then, this fine powder was subjected to press molding (pressure: 10 MPa). Thereafter, this molded body was heat-treated in an air atmosphere at 1700 °C for 1 hour. When the fired body was visually observed, it was confirmed that melting or the like due to the high temperature heat treatment at 1700 °C did not occur. The density $\rho$ was 7.40 g/cm$^3$.

The obtained fired body was dry-ground in a mortar at room temperature (25 °C), and X-ray diffraction measurement was performed on the ground product. As a result of the X-ray diffraction measurement, it was confirmed that the fired body is composed of only LaTa$_3$O$_9$ having a tetragonal crystal system.

For the fired body of each of Example 1 (YbTa$_3$O$_9$), Example 2 ((Yb$_{0.9}$La$_{0.1}$)Ta$_3$O$_9$), Example 3 (Y$_{0.8}$(Ta$_{0.9}$Hf$_{0.1}$)$_3$O$_{8.6}$), Comparative Example 1 (7.4 wt% Y$_2$O$_3$-ZrO$_2$), and Comparative Example 2 (LaTa$_3$O$_9$), the thermal conductivity was measured by the following method.

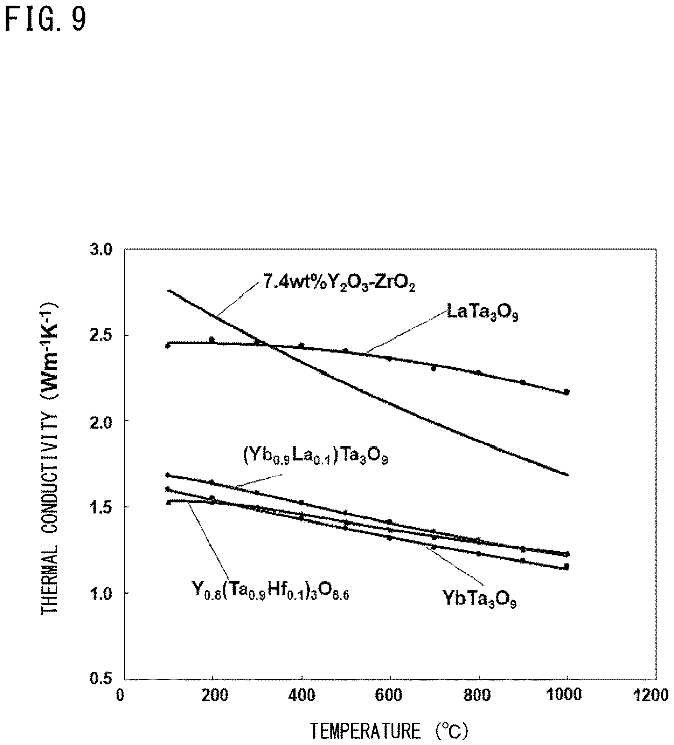

The measurement results of thermal conductivity are shown in FIG. 9.

Measurement of Thermal Conductivity

Each sample was subjected to a laser flash method (according to JIS R 1611) to measure thermal conductivities at 25 °C, 100 °C, 200 °C, 300 °C, 400 °C, 500 °C, 600 °C, 700 °C, 800 °C, 900 °C, and 1000 °C.

The thermal conductivity of a solid is affected by pores, and becomes a low value when the solid includes pores. Thus, the measured value of thermal conductivity was corrected using a correction equation shown in the following Formula (7) (reference literature: C. Wan, et al., Acta Mater., 58, 6166-6172 (2010)), to obtain a corrected thermal conductivity.

$$k'/k = 1 - 4/3\varphi \qquad \ldots(7)$$

(in Formula (7), k' is the thermal conductivity of the specimen, k is the thermal conductivity as a dense substance, and $\varphi$ is the porosity).

As shown in FIG. 9, the thermal conductivity of each of Example 1 (YbTa$_3$O$_9$), Example 2 ((Yb$_{0.9}$La$_{0.1}$)Ta$_3$O$_9$), and Example 3 (Y$_{0.8}$(Ta$_{0.9}$Hf$_{0.1}$)$_3$O$_{8.6}$) was sufficiently lower than those of YSZ and LaTa$_3$O$_9$.

Example 4

A thermal barrier coating was produced by the following method.

As a substrate for forming the thermal barrier coating, a plate made of stainless steel (SUS304) and having a length of 50 mm, a width of 50 mm, and a thickness of 5 mm was prepared, and a thermally sprayed coating (thermal barrier coating) having a thickness of 200 $\mu$m was formed on the substrate by atmospheric plasma spraying using, as a thermal spraying material, powder (particle size: 10 to 63 $\mu$m) of the fired body (Y$_{0.8}$(Ta$_{0.9}$Hf$_{0.1}$)$_3$O$_{8.6}$) produced in Example 3.

Thereafter, the produced sample (thermal barrier coating) was cut, and the cross-section of the sample was observed with a scanning electron microscope (SEM).

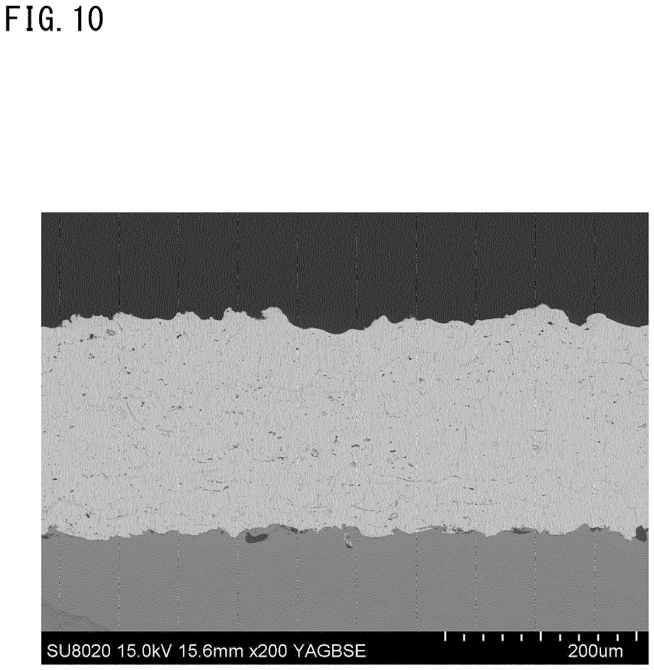

FIG. 10 is an observation image of the cut surface of the thermal barrier coating of Example 4, taken with the scanning electron microscope.

As shown in FIG. 10, the thermal barrier coating layer formed on the substrate is densely formed with high adhesion without cracking or peeling.

LIST OF REFERENCE SIGNS

| | |
|---|---|
| 1 | article |
| 2 | article |
| 11 | thermal barrier coating |
| 21 | thermal barrier coating |
| 31 | thermal barrier coating |
| 23 | intermediate layer |
| 15 | substrate |
| 25 | substrate |
| 101 | metal bonding layer |
| 102 | alumina layer |
| 103 | first intermediate layer (hafnia layer) |
| 104 | second intermediate layer |
| 105 | thermal barrier layer |

**Claims**

1. A thermal barrier coating material containing a compound X which is a cation-deficient-type defective perovskite complex oxide, wherein

   - unit cells of the compound X each include six oxygen atoms and has a structure in which two octahedrons sharing one oxygen atom are aligned,
   - in the compound X, central axes of two octahedrons that belong to adjacent unit cells, respectively, and are adjacent to each other are inclined relative to each other,
   - a plurality of sets of the two octahedrons that belong to the adjacent unit cells, respectively, and are adjacent to each other are arranged to form a periodic structure in which octahedrons having different inclinations are alternately arranged, and
   - the compound X has a boundary surface at which a periodicity of the periodic structure changes, in a crystal structure thereof.

2. The thermal barrier coating material according to claim 1, wherein a crystal system of the compound X is a tetragonal crystal system.

3. The thermal barrier coating material according to claim 1 or 2,
   wherein
   a plurality of the boundary surfaces exist in the crystal structure of the compound X, and
   one side of a region surrounded by the plurality of the boundary surfaces has a length of 1 to 10 nm.

4. The thermal barrier coating material according to any one of claims 1 to 3,
   wherein the central axes of the two octahedrons included in each of the unit cells are inclined in directions different from each other.

5. The thermal barrier coating material according to any one of claims 1 to 4,
   wherein the periodic structure forms one unit having a total of four octahedrons including two octahedrons aligned vertically and two octahedrons aligned horizontally, as a constituent unit, when being viewed in a direction in which the two octahedrons of the unit cell are aligned.

**6.** The thermal barrier coating material according to claim 5,
wherein, in the crystal structure of the compound X, when focusing on two units that are adjacent to each other with a boundary line as a boundary when being viewed in the direction in which the two octahedrons of the unit cell are aligned, the central axes of the four octahedrons included in each of the respective units are inclined so as to be line-symmetrical to each other.

**7.** The thermal barrier coating material according to any one of claims 1 to 6,
wherein the compound X is a compound represented by the following general Formula (1),

$$(M_{1-x}A_x)_{1-y-z}(Ta_{1-y}D_y)_3O_{9+\delta} \qquad (1)$$

(wherein M is an atom of one element selected from among rare earth elements having a smaller ion radius than Sm, A is an atom of one element selected from among all rare earth elements, D is Hf or Zr, x, y, and z satisfy $0 \leq x \leq 0.4$, $0 \leq y \leq 0.2$, and $0 \leq z \leq 0.2$, respectively, and $\delta$ is a value satisfying electroneutrality, but a case where x, y, and z are all 0 is excluded).

**8.** The thermal barrier coating material according to claim 7,
wherein, in the compound represented by the general Formula (1), M is Y, x = 0, $0 < y \leq 0.2$, and $0 \leq z \leq 0.2$.

**9.** The thermal barrier coating material according to claim 7,
wherein, in the compound represented by the general Formula (1),
M is Yb, $0 < x \leq 0.4$, y = 0, and z = 0.

**10.** An article comprising:

- a substrate; and
- a coating laminated on the substrate and containing the thermal barrier coating material according to any one of claims 1 to 9.

**11.** The article according to claim 10,
wherein the article is a gas turbine part or a jet engine part.

# FIG. 1

R

TaO6 OCTAHEDRON

TaO2 PLANE

RO PLANE

Z

Y

X

# FIG. 2A

# FIG. 2B

# FIG. 3

FIG. 4

(TaO$_2$ PLANE)

θ

Ta

O

FIG.5

FIG. 6

FIG. 7

FIG. 8A

FIG. 8B

FIG. 9

FIG. 10

SU8020 15.0kV 15.6mm x200 YAGBSE                    200um

# EP 3 848 481 A1

<table>
<tr><td colspan="2" align="center">INTERNATIONAL SEARCH REPORT</td><td>International application No.<br>PCT/JP2019/034471</td></tr>
</table>

**A. CLASSIFICATION OF SUBJECT MATTER**
Int.Cl. C23C4/11(2016.01)i, B32B9/00(2006.01)i, F01D25/00(2006.01)i, F02C7/00(2006.01)i

According to International Patent Classification (IPC) or to both national classification and IPC

**B. FIELDS SEARCHED**

Minimum documentation searched (classification system followed by classification symbols)
Int.Cl. C23C4/11, B32B9/00, F01D25/00, F02C7/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2014-234553 A (JAPAN FINE CERAMICS CENTER) 15 December 2014, claims, paragraphs [0001]-[0007], [0022]-[0027], fig. 4 (Family: none) | 1-7, 10-11<br>8-9 |
| X<br>A | WO 2015/076176 A1 (NIPPON GLASS KK) 28 May 2015, paragraphs [0001]-[0021], [0032] (Family: none) | 1-7, 10-11<br>8-9 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07.10.2019 | Date of mailing of the international search report<br>15.10.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

30

**INTERNATIONAL SEARCH REPORT**

| International application No. |
| --- |
| PCT/JP2019/034471 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>A | CN 107285768 A (KUNMING UNIVERSITY OF SCIENCE AND TECHNOLOGY) 24 October 2017, claims, examples 1-7, fig. 5, 6<br>(Family: none) | 1-6, 10-11<br>7-9 |
| X<br>A | JP 2014-125656 A (JAPAN FINE CERAMICS CENTER) 07 July 2014, claims, paragraphs [0001]-[0007], [0023]-[0025], fig. 4<br>(Family: none) | 1-6, 10-11<br>7-9 |
| E, X | JP 2019-151927 A (JAPAN FINE CERAMICS CENTER) 12 September 2019, claims 1-3<br>(Family: none) | 1-6, 10-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014125656 A

- JP 2014234553 A

**Non-patent literature cited in the description**

- **C. WAN et al.** *Acta Mater.,* 2010, vol. 58, 6166-6172